# EUROPEAN PATENT APPLICATION

(11) **EP 1 580 830 A2**
(43) Date of publication of application: **28.09.2005**
(21) Application number: 05006308.0
(22) Date of filing: 22.03.2005
(51) Int. Cl.: H01M 8/04

(54) **Fuel cell control system and related method**

(30) Priority: 23.03.2004 JP 2004084630
(71) Applicant: NISSAN MOTOR CO., LTD., Kanagawa-ken (JP)
(72) Inventor: Ootake, Yoshinao, Yokosuka-shi Kanagawa-ken (JP); Iio, Masatoshi, Yokosuka-shi Kanagawa-ken (JP)
(74) Representative: Grünecker, Kinkeldey, Stockmair & Schwanhäusser Anwaltssozietät

(57) **Abstract**

A fuel cell control system 1 includes a cooling liquid inlet temperature sensor 16 and a cooling liquid outlet temperature for detecting an operating temperature of a fuel cell stack 11A, a radiator 14 by which the operating temperature of the fuel cell stack 11A is regulated, and a control box 19 operative to set a fundamental target operating temperature, which forms an operating temperature to be a target for the fuel cell stack 11A to operate, to either an appropriate operating temperature range on a high temperature side or an appropriate operating temperature range on a low temperature side, which maximizes a system efficiency of the fuel cell system on a high temperature side, to control a bypass rate of the radiator 14 through a three-way valve 15 so as to allow the operating temperature of the fuel cell stack 11A to approach to the fundamental target operating temperature.

## Description

### BACKGROUND OF THE INVENTION

The present invention relates to a fuel cell control system installed on a moving object, such as a vehicle, to allow a fuel cell to generate electric power at a high efficiency for generating a driving torque for the moving object.

Japanese Patent Application Laid-Open No.2001-202981 discloses a fuel cell operation control system that is possible to operate a fuel cell for a long period of time without suffering from adverse affects caused by external factors of the fuel cell.

The fuel cell operation control system contemplates control to regulate the flow rate of air supplied to a fuel cell body depending on the temperature inside the fuel cell body detected by a temperature sensor for permitting the temperature inside the fuel cell body to be maintained at a fixed target operating temperature.

### SUMMARY OF THE INVENTION

However, such a fuel cell operation control system is configured to execute control such that a target operating temperature is set to a fixed value or an upper limit and a lower limit of the target operating temperature are set so as to allow the target operating temperature to be maintained within such a range. As a consequence, the fuel cell operation control system does not take into consideration an electric power-generating efficiency of a whole system.

That is, with the fuel cell operation control system, under low load conditions where air is not very necessary for the fuel cell body, even when air is supplied to the fuel cell body depending on the amount of demanded electric power during the low load conditions, no optimum target operating temperature can be attained with a resultant need for the air flow rate to be increased. Accordingly, a need arises in supplying necessary air with the resultant consumption of electric power in excess, causing issues of unfavorable electric power-consuming efficiency of the whole system.

The present invention has been completed with the above issues in mind and has an object to provide a fuel cell operation control system that makes it possible to improve a comprehensive electric power-generating efficiency (system efficiency).

An aspect of the present invention provides a fuel cell control system comprising a fuel cell, an operating temperature detector detecting a value of an operating temperature of the fuel cell, a cooling device circulating cooling liquid through the fuel cell to regulate the operating temperature of fuel cell, and a controller controlling the cooling device such that a fundamental target operating temperature, which is an operating temperature to be target for which the fuel cell is operated, is set to either an appropriate operating temperature range on a high temperature side or an appropriate operating temperature range on a low temperature side whereby a value of the operating temperature detected by the operating temperature detector falls in a value within a range of the fundamental target operating temperature.

According to another aspect of the present invention, there is provided a method of controlling a fuel cell system, the method comprising providing a fuel cell, detecting a value of an operating temperature of the fuel cell, circulating cooling liquid through the fuel cell to regulate the operating temperature of the fuel cell, and controlling a temperature of the cooling liquid such that a fundamental target operating temperature, which is an operating temperature of the fuel cell to be target for which the fuel cell is operated, is set to either an appropriate operating temperature range on a high temperature side or an appropriate operating temperature range on a low temperature side whereby a value of the detected operating temperature of the fuel cell falls in a value within a range of the fundamental target operating temperature.

### BRIEF DESCRIPTION OF THE DRAWINGS

FIG. 1 is a block diagram of a fuel cell control system according to the present invention.
FIG. 2 is a view for illustrating an operating temperature dependence of an output current-voltage characteristic of a fuel cell stack incorporated in the fuel cell control system according to the present invention.
FIG. 3 is a view for illustrating an operating temperature dependence of a hydrogen permeation coefficient and an operating temperature dependence of the amount of hydrogen during nitrogen purging of the fuel cell stack incorporated in the fuel cell control system according to the present invention.
FIG. 4 is a view illustrating an operating temperature dependence of a comprehensive electric power-generating efficiency of the fuel cell control system according to the present invention.
FIG. 5 is a first flowchart illustrating a basic sequence of operating temperature control operations of a fuel cell control system of a first embodiment according to the present invention.
FIG. 6 is a second flowchart illustrating a basic sequence of operating temperature control operations of the fuel cell control system of the first embodiment according to the present invention.
FIG. 7 is a third flowchart illustrating a basic sequence of operating temperature control operations of the fuel cell control system of the first embodiment according to the present invention.
FIG. 8 is a fourth flowchart illustrating a basic sequence of operating temperature control operations of the fuel cell control system of the first embodiment according to the present invention.
FIG. 9 is a flowchart illustrating a basic sequence of operating temperature control operations of a fuel cell control system of a second embodiment according to the present invention.
FIG. 10 is a flowchart illustrating a basic sequence of operating temperature control operations of a fuel cell control system of a third embodiment according to the present invention.

### DETAILED DESCRIPTION OF THE PREFERRED EMBODIMENS

Hereinafter, various embodiments according to the present invention are described with reference to the accompanying drawings.

### <First Embodiment>

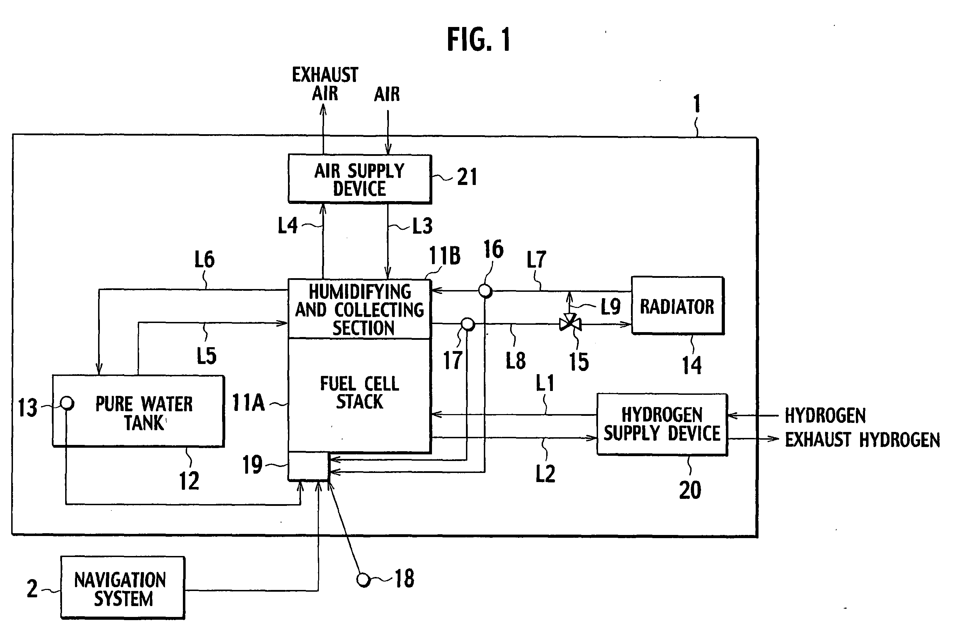

FIG. 1 shows a structure of a fuel cell control system of a first embodiment.

### [Structure of Fuel Cell Control System 1]

The fuel cell control system 1 is a system that is installed on a moving object, such as a fuel cell powered automobile, to cause a fuel cell to generate electric power that is supplied to a drive motor (not shown) to generate a running torque.

The fuel cell control system 1 includes a fuel cell stack 11A that is supplied with fuel gas and oxidizer gas to generate electric power. The fuel cell stack 11A is comprised of a plurality of stacked unit cells each of which includes a fuel cell structural body, sandwiched between separators, which includes a cathode electrode and an anode electrode between which a solid polymer electrolyte membrane is sandwiched. In order to allow electrochemical reaction to occur in a fuel cell to generate electric power, the fuel cell control system 1 of the presently filed embodiment contemplates to control an electric power-generating efficiency of the fuel cell system in which hydrogen gas is supplied as fuel gas to the anode electrode of the fuel cell stack 11A to the cathode of which air containing oxygen is supplied as oxidizer gas.

Provided inside the fuel cell stack 11A is a humidifying and collecting section 11B that humidifies air being supplied to the inside of the fuel cell stack 11A while collecting moisture from air that is not used for electric power-generating reaction, and product water resulting from electric power-generating reaction. The humidifying and collecting section 11B humidifies air during electric power generation of the fuel cell stack 11A to cause the solid polymer electrolyte membrane to fall in a moistened condition while collecting excessive moisture, such as product water, resulting from electric power-generating reaction.

Further, the fuel cell control system 1 is comprised of a hydrogen supply line through which hydrogen gas is supplied to the fuel cell stack 11A, an air supply line through which air is supplied to the fuel cell stack 11A, a humidifying pure water circulating line by which the fuel cell stack 11A is humidified, and a coolant liquid circulating line that performs temperature regulation of the fuel cell stack 11A. With the fuel cell control system 1, a control box 19, serving as a controller, which will be described later, controls these lines.

The hydrogen supply line is comprised of a hydrogen supply device 20, composed of a hydrogen tank and a hydrogen pressure regulator valve (not shown), a hydrogen supply conduit L1 and a hydrogen exhaust conduit L2 and controlled by the control box 19. The control box 19 controls to allow hydrogen gas to be supplied to the anode electrode of the fuel cell stack 11A via the hydrogen supply conduit L1 at a rate depending on the amount of electric power generated by the fuel cell stack 11A. Additionally, the control box 19 allows hydrogen gas, which is not used in electric power generation of the fuel cell stack 11A, to the hydrogen exhaust conduit L2 for mixing with hydrogen gas in the hydrogen supply conduit L1 again to be supplied to or exhausted from the fuel cell stack 11A.

The air supply line is comprised of an air supply device 21, composed of a compressor and an air pressure regulator valve (not shown), an air supply conduit L3 and an air exhaust conduit L4 and controlled by the control box 19. The control box 19 controls air to be supplied to the cathode electrode of the fuel cell stack 11A via the air supply conduit L3 at a rate depending on the amount of electric power generated by the fuel cell stack 11A. Here, air to be supplied to the fuel cell stack 11A is humidified by the humidifying and collecting section 11B and subsequently introduced into the cathode electrode. Additionally, the control box 19 allows the humidifying and collecting section 11B to collect moisture from air, which is not used in electric power generation of the fuel cell stack 11A, and permits resulting air to be introduced to the air exhaust conduit L4 for exhausting to the outside.

The humidifying and pure water circulating line is comprised of a pure water tank 12 in which humidifying water, to be supplied to the humidifying and collecting section 11B, is accumulated, a pure water supply conduit L5 and a pure-water collecting conduit L6 through which the pure water tank 12 and the humidifying and collecting section 11B are connected to one another, and a pure water pump (not shown) disposed in the pure water supply conduit L5 and controlled by the control box 19. The control box 19 drives the pure water pump during electric power generation of the fuel cell stack 11A to allow pure water to be supplied from the pure water pump 12 to the humidifying and collecting section 11B via the pure water supply conduit L5 for thereby permitting the humidifying and collecting section 11B to humidify air upon which pure water is exhausted from the fuel cell stack 11A via the pure-water collecting conduit L6 while permitting the humidifying and collecting section 11B to collect moisture from air for returning to the pure water tank 12. Product water, resulting from electric power generation of the fuel cell stack 11A, is collected in the humidifying and collecting section 11B and delivered to the pure water tank 12 via the pure-water collecting conduit L6.

Further, with such a humidifying pure water circulating line, disposed in the pure water tank 12 is a pure water level sensor 13 that detects a water level of accumulated pure water. The control box 19 reads a detected value delivered from the pure water level sensor 13.

The coolant liquid circulating line is comprised of a radiator 14, a coolant liquid supply conduit L7 and coolant liquid circulating conduit L8, through which the radiator 14 and the humidifying and collecting section 11B are connected, a three-way valve 15 disposed in the coolant liquid circulating conduit L8, a coolant liquid bypass conduit L9 by which the coolant liquid supply conduit L7 and coolant liquid circulating conduit L8 are bypassed via the three-way valve 15, and a cooling liquid pump (not shown) and controlled by the control box 19. The radiator 19 and the three-way control valve 15 serve as a cooling device for the fuel cell stack 11A as will be described alter. The control box 19 drives the coolant liquid pump during electric power generation of the fuel cell stack 11A to allow coolant liquid (LLC) to be circulated to the fuel cell stack 11A. Further, with the coolant liquid circulating line, the radiator 14 receives air blasting, resulting from running of a vehicle, for heat exchange with internally passing coolant liquid to lower a temperature of coolant liquid. Also, the three-way valve 15 is responsive to a control signal from the control box 19 to regulate the opening degrees of one opening, connected to the radiator 14, and another opening connected to the coolant liquid bypass conduit L9 for thereby regulating a ratio between the flow rate of coolant liquid, passing across the radiator 14, and the flow rate of coolant liquid bypassing the radiator 14.

Further, disposed in the coolant liquid supply conduit L7 and the coolant liquid circulating conduit L8, respectively, are a coolant liquid inlet temperature sensor 16 and a coolant liquid outlet temperature sensor 17 that serve as an operating temperature detector for detecting operating temperatures of the fuel cell stack 11A. The control box 19 reads detected values of the coolant liquid inlet temperature sensor 16 and the coolant liquid outlet temperature sensor 17 to recognize the operating temperatures of the fuel cell stack 11A.

The control box 19 reads the detected values of the coolant liquid inlet temperature sensor 16, the coolant liquid outlet temperature sensor 17 and the pure water level sensor 13, which are described above, while reading a detected value of an atmospheric temperature sensor 18. Moreover, the control box 19 reads navigation information, containing road information on a traveling path of the vehicle, from a navigation system 2. Also, navigation information may include driving statuses, altitudes and gradients of roads on which the vehicle is traveling.

Then, the control box 19 performs operating temperature control operations using information delivered from the respective sensors and the navigation system 2 to control the operating temperature of the fuel cell stack 11A such that the fuel cell system operates at an optimum efficiency. Also, a basic sequence of the operating temperature control operations is described below.

### [Principle of Operating Temperature Control Operations]

Now, description is made of a principle of operating temperature control operations to be executed by the control box 19.

Usually, an electric power-generating efficiency of the fuel cell system drastically varies depending on three factors including: (1) a current-voltage characteristic of the fuel cell stack; (2) the amount of hydrogen gas, supplied to the anode electrode, and oxygen, supplied to the cathode electrode, which are caused to couple to one another without contributing to electric power generation; and (3) the amount of hydrogen purged with nitrogen when purging nitrogen (N₂) accumulated in the anode electrode. These three factors are entirely dependent on the operating temperatures of the fuel cell stack and variation in the operating temperatures results in variation in the respective parameters.

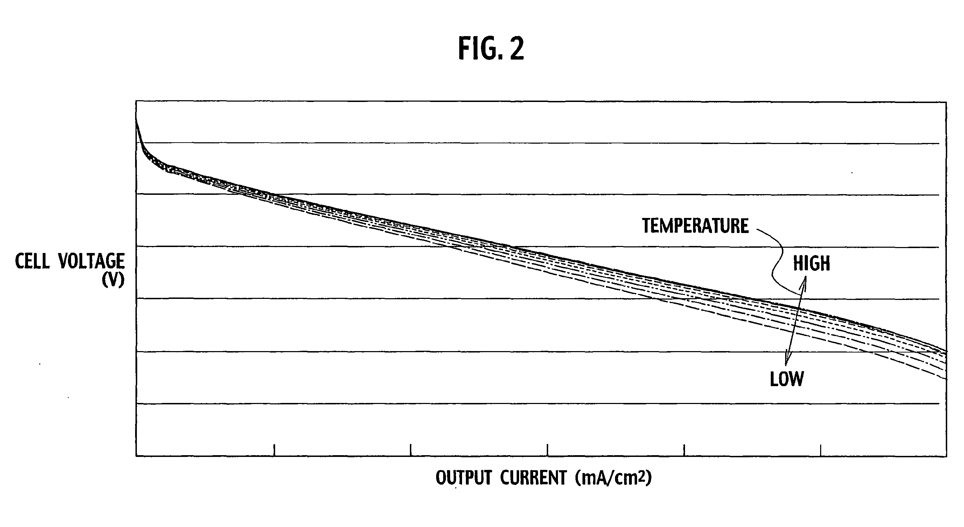

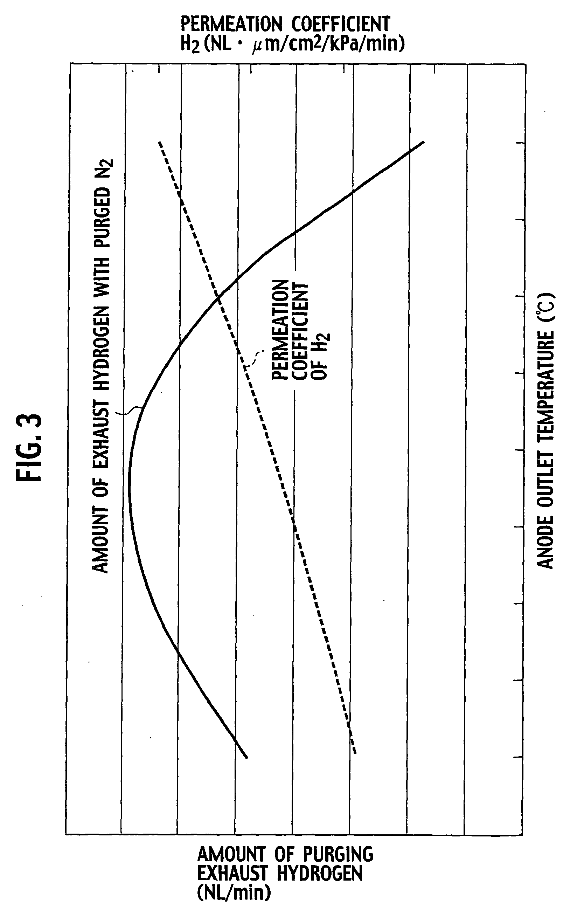

FIG. 2 shows an operating temperature dependence in an output current-cell voltage characteristic (I-V characteristic) of the fuel cell stack 11A, and FIG. 3 shows an operating temperature dependence of a permeation coefficient of hydrogen (H2), indicative of a rate of the amount of hydrogen permeating through the solid polymer electrolyte inside the fuel cell stack 11A to transfer from the anode electrode to the cathode electrode, and an operating temperature dependence of the amount of hydrogen to be exhausted upon purging.

As shown in FIG. 2, the output current-cell voltage characteristic of the fuel cell stack 11A does not depend on the operating temperatures during a low output (with low current) but during high output (with high output current), an increase in the operating temperatures of the fuel cell stack 11A causes an increase in a cell voltage as shown by different kinds of line segments. This is due to the fact that as the operating temperatures of the fuel cell stack 11A increase, energy increases with the resultant increase in the amount of hydrogen ions permeating through the solid polymer electrolyte membrane.

As shown in FIG. 3, the hydrogen permeating coefficient increases as the operating temperatures of the fuel cell stack 11A increase, that is, the temperature of hydrogen gas, expelled from the anode electrode, increases. Further, the amount of hydrogen, exhausted upon purging, decreases in areas where the operating temperatures of the fuel cell stack 11A remain at low and high levels. The reason why the amount of hydrogen, exhausted when the operating temperatures of the fuel cell stack 11A remains high, becomes less resides in a fact that the amount of permeating nitrogen increases like hydrogen with the resultant increase in a purging time interval while the amount of H₂O gas (the amount of steam), present in the anode electrode, remains high to cause an increase in the amount of H₂O gas exhausted during purging with the resultant relative decrease in the amount of exhaust hydrogen. In the meanwhile, the reason why the amount of hydrogen exhausted when the operating temperatures of the fuel cell stack 11A remains low resides in a fact that due to less permeation of hydrogen through the solid polymer electrolyte membrane, the amount of hydrogen decreases like the amount of nitrogen in the anode electrode to cause the purging time interval to become shortened.

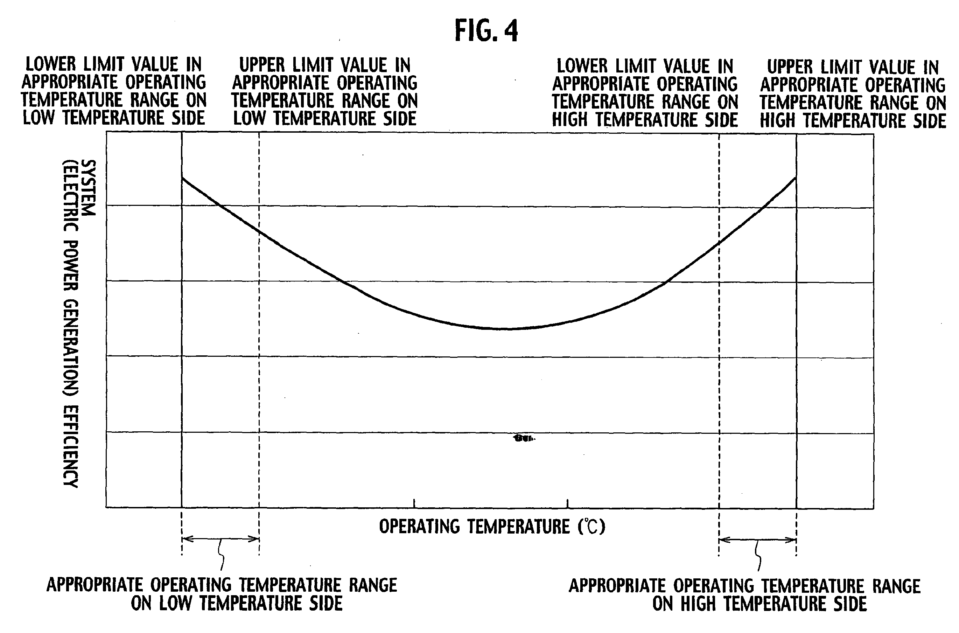

FIG. 4 shows an electric power generation (system) efficiency (the amount of generated electric power in terms of the amount of consumed hydrogen) based on the above characteristic. With such indication, it is apparent that the electric power generating efficiency of the fuel cell system marks high levels when the operating temperatures of the fuel cell stack 11A remain on low and high temperature sides. Such polarization in the electric power generating efficiency of the fuel cell system becomes prominent especially during low loads, that is, when the amount of electric power demanded to the fuel cell stack 11A is low.

Accordingly, depending on information delivered from various sensors and navigation system 2, the control box 19 controls various lines such that the operating temperatures of the fuel cell stack 11A fall in a value within an appropriate operating temperature range on a low temperature side or a value in another appropriate operating temperature range on a high temperature side, thereby enabling the fuel cell system to have an increased efficiency. That is, the control box 19 is configured such that the operating temperatures of the fuel cell stack 11A are allocated with an upper limit value and a lower limit value as target values on the low and high temperature sides, respectively, to allow the temperatures of the fuel cell stack 11A to be regulated such that the operating temperatures of the fuel cell stack 11A fall in a range between the lower and upper limit values of the operating temperature range on the high temperature side or in a range between the lower and upper limit values of the operating temperature range on the low temperature side whereby an increased efficiency can be achieved. Under circumstances where normal operating temperatures of the fuel cell stack 11A fall in a value ranging from 50°C to 120°C, the appropriate operating temperature range on the low temperature side is set to lie in a value of 50°C to 60°C and the appropriate operating temperature range on the high temperature side is set to lie in a value of 110°C to 120°C. Also, the appropriate operating temperature ranges on the low and high temperature sides differ from one another due to an inherent structure of the fuel cell stack 11A and the characteristics shown in FIGS. 2 and 3 and are stored in the control box 19 as numeric values calculated upon experimental tests.

### [Operation Content of Operating Temperature Control Operations]

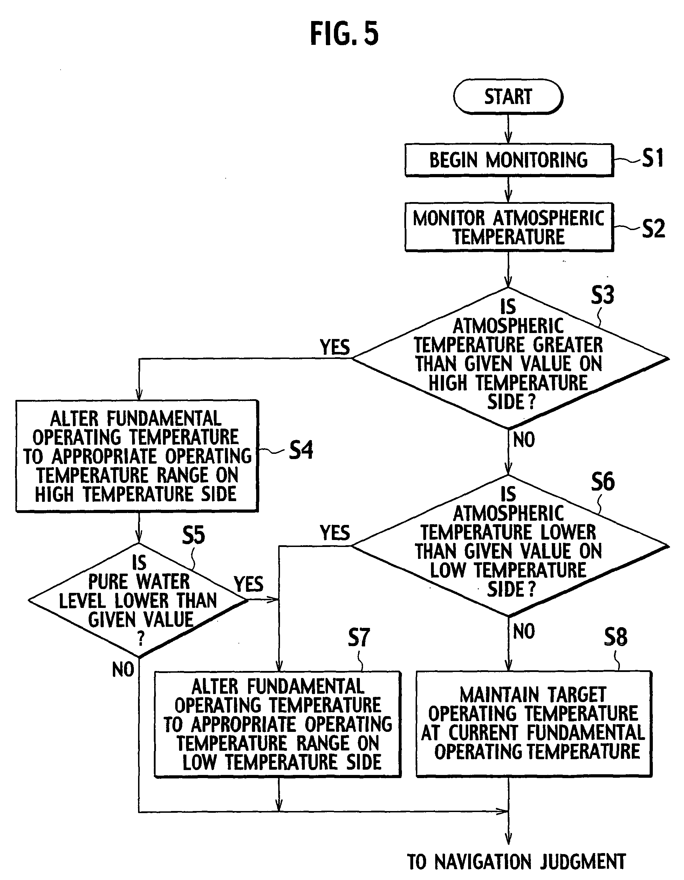

Next, an operation content of the operating temperature control operations, set forth above, is described below with reference to flowcharts shown in FIGS. 5 to 8.

The operating temperature control operations begin to execute operations subsequent to step S1 when the fuel cell system 1 is started up or an operation routine, which will be described below, is commenced again and the control box 19 receives information from the various sensors and the navigation system 2. Also, in first step S1 in which the fuel cell system 1 starts up, a fundamental target operating temperature, which will be described later, shall be set to the appropriate operating temperature range on the low temperature side.

In step S1, the control box 19 reads out a sensor signal from the atmospheric temperature sensor 18 to begin monitoring the atmospheric temperature and in step S2, permits the measurement on a value of an atmospheric temperature outside a vehicle.

In step S3, the control box 19 makes comparison between the value of the measured atmospheric temperature and a given value on a high temperature side, which is preset in relation to the atmospheric temperature, to discriminate whether in an environment marked by the current atmospheric temperature, the operating temperatures of the fuel cell stack 11A can be cooled to a value falling in the appropriate operating temperature range on the low temperature side. Also, the given value on the high temperature side is set such that the higher the heat radiating capacity of the radiator 7 to be cooled by coolant liquid heat exchanged with atmospheric air, the higher will be the temperature for the given value. Then, if discrimination is made that a value of the atmospheric temperature exceeds the given value on the high temperature side, the operation proceeds to step S4 and if discrimination is made that the value of the atmospheric temperature does not exceed the given value on the high temperature side, the operation proceeds to step S6.

In step S4, since the value of the atmospheric temperature exceeds the given value on the high temperature side, the control box 19 sets the fundamental target operating temperature to the appropriate operating temperature range on the high temperature side. Thus, upon setting the fundamental target operating temperature, which serves as a fundamental target during a period for which the fuel cell stack 11A generates electric power, to the appropriate operating temperature range on the high temperature side, the control box 19 is able to maintain the target operating temperature of the fuel cell system in a value within the appropriate operating temperature range on the high temperature side at all times, thereby enabling the execution of control in a way to increase the efficiency.

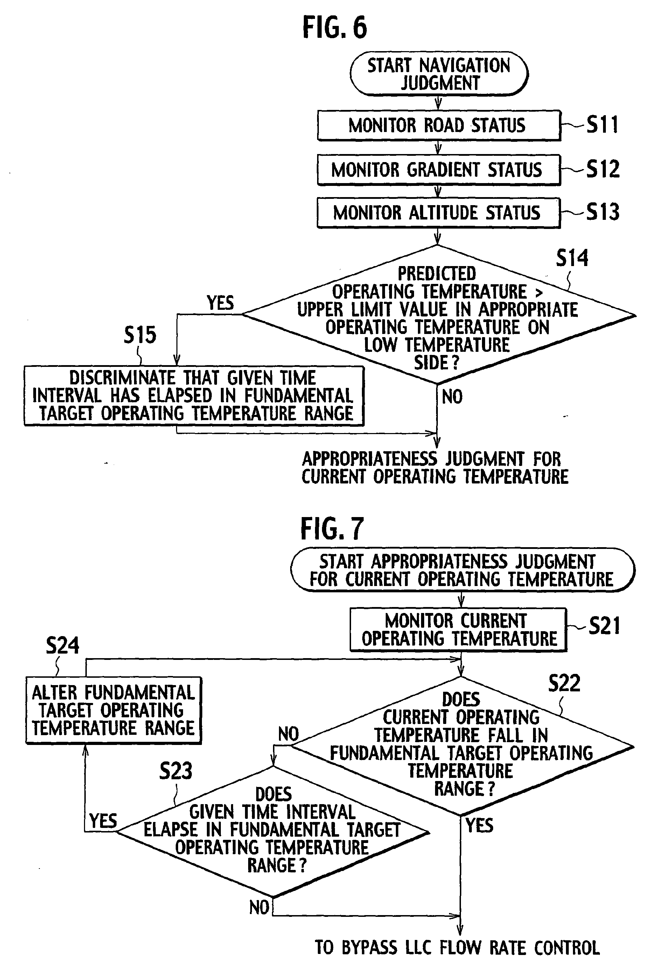

In step S5, upon receipt of a sensor signal from the pure water level sensor 13, the control box 19 discriminates whether a water level in the pure water tank 12 is less than a given value. Here, the reason why the pure water level is discriminated after setting the fundamental target operating temperature to the appropriate operating temperature range on the high temperature side resides in a fact that when the fuel cell stack 11A operates at high temperatures, there is a need for a large amount of moisture to be supplied to the solid polymer electrode membrane to cause the same to remain under a fixed moistened condition. Also, the given value on the water level is set to a water level not to cause depletion of humidifying pure water stored in the pure water tank 12. If the water level is found to be less than the given value, then, the control box 19 allows the operation to proceeds to step S7 and if the water level is higher than the given value, then, the operation proceeds to navigation judgment operation in FIG. 6.

On the contrary, in step S6 where discrimination is made that the value of the atmospheric temperature does not exceed the given value on the high temperature side in step S3, the control box 19 makes comparison between the value of the atmospheric temperature, measured in step S2, and the given value on the low temperature side to discriminate whether under the environments in the current atmospheric temperatures, the operating temperatures of the fuel cell stack 11A can be cooled to a value falling in the appropriate operating temperature range on the low temperature side. Also, the given value on the low temperature side is selected to be lower than the given value on the high temperature side and set such that the higher the heat radiating capacity of the radiator 7, the higher will be the temperature for the given value. Then, if discrimination is made that the value of the atmospheric temperature is less than the given value on the low temperature side, the operation proceeds to step S7 and if discrimination is made that the value of the atmospheric temperature is not less than the given value on the low temperature side, the operation proceeds to step S8.

In step S7, in response to the presence of the atmospheric temperature with a value less than the given value on the low temperature side or the presence of the water level of the pure water tank 12 falling in a value less than the given value, the control box 19 sets the fundamental target operating temperature to the appropriate operating temperature range on the low temperature side. That is, if the water level in the pure water tank 12 is less than the given value, the operation is executed giving the highest priority to a water balance.

Thus, upon setting the fundamental target operating temperature to the appropriate operating temperature range on the low temperature side, the control box 19 is enabled to execute control in a way to render the fuel cell system operative so as to maintain the target operating temperature within the appropriate operating temperature range on the low temperature side at all times for providing improved efficiency while enabling improvement over the water balance.

If discrimination is made that the value of the atmospheric pressure does not exceed the given value on the high temperature side in step S3 and the value of the atmospheric pressure is not less than the given value on the low temperature side in step S6, then, in step S8, the control box 19 keeps the fuel cell stack 11A to operate at the fundamental target operating temperature that is currently preset. By so doing, frequent shifts in the fundamental target operating temperature can be avoided to suppress fluctuations in the operating temperatures of the fuel cell stack 11A, while enabling improvement in efficiency. Also, if the operation reaches to step S8 during startup of the fuel cell control system 1, then, the fundamental target operating temperature remains unchanged in the appropriate operating temperature range on the low temperature side.

With such operation, the setting of the fundamental target operating temperature based on the atmospheric temperature is completed and the control box 19 executes the setting of the fundamental target operating temperature based on information from the navigation system 2. During such operation, as shown in FIG. 6, the control box 19 acquires road status information from the navigation system 2 in step S11 and gradient status information in step S12 while acquiring altitude status information in step S13.

In step S14, the control box 19 predicts the operating temperatures of the fuel cell stack 11A during a time period from the current time to a subsequent time based on road status information, gradient status information and altitude status information acquired in steps S11 to S13, thereby acquiring a predicted operating temperature. When this takes place, under circumstances where it is predicted based on road status information that the vehicle is running on urban areas, where roads are overcrowded with vehicles, and fast expressways and the amount of electric power generated by the fuel cell stack 11A increases, the control box 19 raises the predicted operating temperature whereas when the vehicle is traveling on open roads that are not overcrowded and the amount of electric power, generated by the fuel cell stack 11A, does not increase, the predicted operating temperature is lowered. Further, under circumstances where the vehicle is traveling on roads with many downslopes and the amount of electric power, generated by the fuel cell stack 11A, does not increase, the control box 19 lowers the predicted operating temperature. Additionally, in contrast, when the vehicle is traveling on the high altitudes with the resultant increase in electric power demanded for the compressor and the amount of electric power, generated by the fuel cell stack 11A, increases, the predicted operating temperature is lowered.

Then in step S14, the control box 19 discriminates whether a value of the predicted operating temperature, acquired from the various parameters, exceeds the upper limit value of the appropriate operating temperature range on the low temperature side, and if the value of the predicted operating temperature is found to exceed the upper limit value of the appropriate operating temperature range on the low temperature side, the operation proceeds to step S15 whereas if not, the operation proceeds to appropriateness judgment operation of the current operating temperature shown in FIG. 7.

In step S15, the control box 19 executes the current operating temperature appropriateness judgment operation, which will be described later, to immediately alter a timing, at which the fundamental target operating temperature is altered, under circumstances where the fundamental target operating temperature is set to the appropriate operating temperature range on the low temperature side:

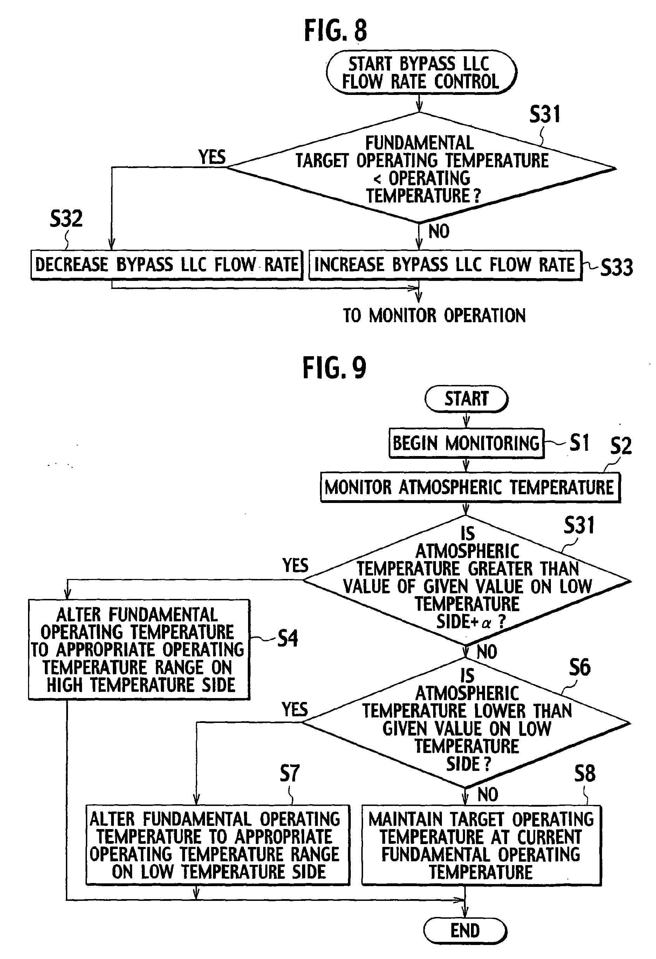

As shown in FIG. 7, during the current operating temperature appropriateness judgment operation, the control box 19 reads the sensor signals delivered from the coolant liquid inlet temperature sensor 16 and the coolant liquid outlet temperature sensor 17 to calculate the current operating temperature of the fuel cell stack 11A based on a difference between the coolant liquid inlet temperature and the coolant liquid outlet temperature. Then, discrimination is made in step S22 whether the current operating temperatures of the fuel cell stack 11A remain within the fundamental target operating temperature range set in steps S4, S7 or S8 in FIG. 8.

If discrimination is made that the current operating temperatures of the fuel cell stack 11A remain within the fundamental target operating temperature range, the control box 19 allows the operation to shift to a bypass coolant-liquid (LLC) flow-rate control operation in FIG. 8. On the contrary, if discrimination is made that the current operating temperatures of the fuel cell stack 11A do not fall in the fundamental target operating temperature range, then, the control box 19 discriminates in step S22 whether a given time interval has elapsed after discrimination is made that the current operating temperature of the fuel cell stack 11A do not fall in the fundamental target operating temperature range. Such a given time interval is set with a view to avoiding the occurrence of fluctuations in the operating temperatures of the fuel cell stack 11A due to frequent changes in the fundamental target operating temperature.

Here, the control box 19 keeps a timer value as a result of counting time with the timer (not shown) and begins counting time using the timer for obtaining the timer value under situations where discrimination is made in step S22 for a preceding operating temperature control operation to be executed that the value in the operating temperatures of the fuel cell stack 11A falls in the fundamental target operating temperature range and discrimination is further made in current step S22 that the value in the operating temperatures of the fuel cell stack 11A does not fall in the fundamental target operating temperature range. In succeeding step S23, the control box 19 allows the operation to proceed to the bypass coolant-liquid (LLC) flow-rate control operation in FIG. 8 under a situation where discrimination is made in step S23 that the timer value does not exceed a given time interval.

On the contrary, if discrimination is made that the timer value exceeds the given time interval, the operation proceeds to step S24 wherein discrimination is made that even when executing the bypass coolant-liquid flow-rate control operation in FIG. 8, the operating temperatures of the fuel cell stack 11A is hard to be shifted to the currently set fundamental target operating temperature and the fuel cell stack 11A is operating at the low operating temperatures to generate electric power with low efficiency, upon which the fundamental target temperature is altered. Also, in addition to the alteration of the fundamental target operating temperature, the timer value is cleared and the operation is shifted to the bypass coolant-liquid flow-rate control operation in FIG. 8 via the operations in steps S22 and S23.

Further, if discrimination is made that in step S15 in FIG. 6, the given time interval has elapsed under a situation where in step S23, the current fundamental target operating temperature falls in the appropriate operating temperature range on the low temperature side, the operation proceeds to step S24 regardless of the timer value. Further, in step S24, when altering the fundamental target operating temperature that is currently set, the operation is executed to detect the operating temperatures of the fuel cell stack 11A to allow the fundamental target operating temperature to be set to one appropriate operating temperature range that is close to the detected relevant operating temperature.

During the bypass coolant-liquid flow-rate control operation in FIG. 8, first in step S31, the control box 19 discriminates whether the current operating temperature of the fuel cell stack 11A is high than the currently set fundamental target operating temperature. In this moment, if discrimination is made that the current operating temperature of the fuel cell stack 11A exceeds the currently set fundamental target operating temperature, then, the control box 19 executes the operation in step S32 so as to increase the flow rate of coolant liquid to be introduced to the radiator 14 from the coolant liquid circulating conduit L8 to cause a decrease in the flow rate of coolant liquid bypassing the radiator 14. When this takes place, the control box 19 executes the operation in a way to decrease the opening degree of the opening of the three-way valve 15, communicating with the coolant liquid bypass conduit L9, while increasing the opening degree of the opening of the three-way valve 15, communicating with the radiator 14, to cause coolant liquid, passing across the fuel cell stack 11A, to pass across the radiator 14 at an increased flow rate, thereby achieving a reduction in the operating temperature of the fuel cell stack 11A.

In contrast, if discrimination is made that the current operating temperatures of the fuel cell stack 11A are less than the current fundamental target operating temperature, then in step S33, the control box 19 executes the operation in a way to increase the flow rate of coolant liquid to be introduced to the coolant liquid bypassing conduit L9 upon bypassing coolant liquid from the coolant liquid circulating conduit L8 to the coolant liquid bypass conduit L9. When this takes place, the control box 19 executes the operation in a way to increase the opening degree of the opening the three-way valve 15, connected to the coolant liquid bypass conduit L9, while decreasing the opening degree of the opening of the three-way valve 15, connected to the radiator 14, to cause a major portion of coolant liquid, passing across the fuel cell stack 11A, to bypass the radiator 14, thereby raising the operating temperatures of the fuel cell stack 11A.

The control box 19 allows the operation to be routed back to step S1 in FIG. 5 again wherein the fundamental target operating temperature is set to control the flow rate of coolant liquid for thereby regulating the operating temperatures of the fuel cell stack 11A.

As set forth above in detail, with the fuel cell system 1 of the presently filed embodiment, the fundamental target operating temperature, which forms a target at which the fuel cell stack 11A operates, is set to either the appropriate operating temperature range on the high temperature side or the appropriate operating temperature range on the low temperature side whereupon the operating temperatures of the fuel cell stack 11A are regulated, thereby enabling the fuel cell stack 11A to generate electric power in temperatures ranges with high electric power-generating (system) efficiency as shown in FIG. 4.

Furthermore, with the fuel cell system 1 of the presently filed embodiment, during the current operating-temperature appropriateness judgment operation in FIG. 7, under circumstances where the operating temperatures of the fuel cell stack 11A take a value out of the appropriate operating temperature range on the low temperature side or the appropriate operating temperature range on the high temperature side, which are set to the fundamental target operating temperature, for a period more than the given time interval, the fundamental target operating temperatures are shifted to the appropriate operating temperature range on the low temperature side or the appropriate operating temperature range on the high temperature side, thereby avoiding the operating temperatures of the fuel cell stack 11A from fluctuation due to frequent changes in the fundamental target operating temperatures.

Moreover, with the fuel cell system 1 of the presently filed embodiment, in cases where the value of the atmospheric temperature is higher than the given value on the high temperature side, the fundamental target operating temperature is switched over to either the appropriate operating temperature range on the high temperature side or the appropriate operating temperature range on the low temperature side, thereby enabling the suppression of fluctuations in the operating temperatures of the fuel cell stack 11A caused by frequent shifts in the fundamental operating temperatures.

In addition, with the fuel cell system 1 of the presently filed embodiment, in cases where the value of the atmospheric temperature is lower than the given value on the high temperature side, the fundamental target operating temperature is altered to the appropriate operating temperature range on the high temperature side. Thus, if the atmospheric temperature remains high, the electric power generating efficiency of the fuel cell system can be improved without causing the fuel cell stack 11A to generate electric power in the appropriate operating temperature range on the low temperature side.

Furthermore, with the fuel cell system 1 of the presently filed embodiment, under circumstances where as a result of executing the operating temperature control operations a number of times, the operating temperatures of the fuel cell stack 11A continuously drop, the fundamental target operating temperature can also be kept in the appropriate operating temperature range on the low temperature side, thereby avoiding the operating temperatures of the fuel cell stack 11A from fluctuation due to frequent changes in the fundamental target operating temperatures.

In addition, with the fuel cell system 1 of the presently filed embodiment, under circumstances where after the fundamental target operating temperature is switched over, the operating temperatures of the fuel cell stack 11A do not reach to the appropriate operating temperature range on the low temperature side or the appropriate operating temperature range on the high temperature side, which the control box sets as the fundamental target operating temperature after the fundamental target operating temperature is switched over, the fundamental target operating temperature is set to either the appropriate operating temperature range on the low temperature side or the appropriate operating temperature range on the high temperature side with a value closer to the detected operating temperature. Thus, even in cases where the operating temperatures of the fuel cell stack 11A do not reach to the fundamental operating temperature even when executing coolant water flow-rate control operation, the fuel cell stack 11A can operate to generate electric power in a temperature range with high efficiency.

Furthermore, with the fuel cell system 1 of the presently filed embodiment, if the water level in the pure water tank 12 drops below the given value, the fundamental target operating temperature is set to the appropriate operating temperature range on the low temperature side, the fuel cell stack 11A is enabled to operate for generating electric power in a temperature range with high efficiency, while reliably establishing a water balance and avoiding depletion of humidifying pure water.

Moreover, with the fuel cell system 1 of the presently filed embodiment, under circumstances where discrimination is made based on road status, road gradient and road altitude that the fundamental target operating temperature is hard to be kept in the appropriate operating temperature range on the low temperature side, the fundamental target operating temperature is set to the appropriate operating temperature range on the high temperature side to avoid the electric power generation at the operating temperatures with low efficiency, thereby enabling an increase in an electric power generating efficiency of the fuel cell system.

### [Second Embodiment]

Next, the above-described operating temperature control operation of a second embodiment according to the present invention is described below. Also, the same steps as those of the above-described operating temperature control operation bear like step numbers and detailed description of the same is herein omitted.

The operating temperature control operation of the second embodiment features that the appropriate operating temperature range on the high temperature side is selected as the fundamental target operating temperature with a top priority. When executing the operating temperature control operation, as shown in FIG. 9, the operation is executed in step S31 in place of step S3 in FIG. 5. In step S31, the control box 19 executes comparison between a value of the atmospheric temperature, measured by the atmospheric temperature sensor 18, and a value (a given value on a low temperature side+ α) in which " α " is added to a given value on a low temperature side. Reference " α " represents a value that prevents the magnitude relationship between the value of the atmospheric temperature and the given value on the low temperature side from hunting due to a slight difference in the atmospheric temperatures in cases where the value of the atmospheric temperature is close to the given value on the low temperature side. Then, if the value of the atmospheric temperature exceeds a value of the given value on the low temperature side with + α , the control box 19 allows the operation proceed to step S4 and if not, the operation proceeds to step S6.

In contrast to the operation in step S3 in FIG. 5 wherein when the value of the atmospheric temperature exceeds the given value on the high temperature side, the fundamental target operating temperature is set to the operating temperature range on the high temperature side, the operation in step S31 is executed such that increasing the given value on the low temperature side by α makes it easy for the fundamental target operating temperature to be set to the appropriate temperature range on the high temperature side.

Accordingly, with the fuel cell system 1 in which the radiator 7 has a small capacity with less expectation in cooling capacity, applying the operations shown in FIG. 9 enables the operating temperature on the high temperature side to be selected as the fundamental target operating temperature with a top priority as much as possible. Thus, the target operating temperature on the high temperature side can be set as the operating temperature of the fuel cell stack 11A, thereby enabling further improvement in electric power-generating efficiency of the fuel cell system.

### [Third Embodiment]

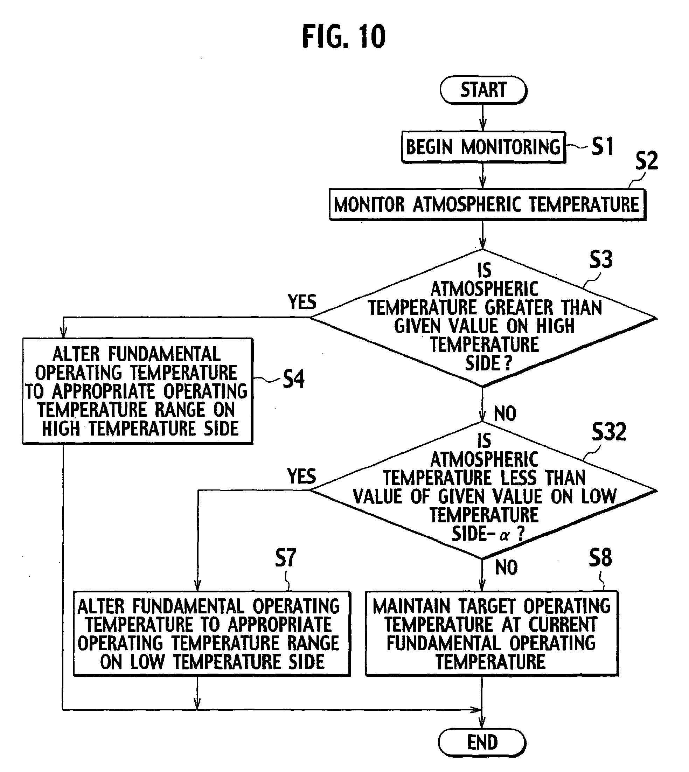

Further, operating temperature control operation of a third embodiment according to the present invention features that the appropriate temperature range on the low temperature side is selected as the fundamental target operating temperature with a top priority. When executing the operating temperature control operation, as shown in FIG. 10, the operation in step S32 is executed in place of the operation in step S6 shown in FIG. 5.

In step S32, the control box 19 executes comparison between the measured value of the atmospheric temperature and a value (a given value on a high temperature side ―α) in which α is subtracted from a given value on a high temperature side upon which discrimination is made based on the current atmospheric temperature value whether the fuel cell stack 11A is possible to be cooled to the operating temperature on the low temperature side. If a value of the atmospheric temperature is less than the given value on the high temperature side with *― α ,* the operation proceeds to step S7 and if the value of the atmospheric temperature exceeds the given value on the high temperature side with― α, the operation proceeds to step S8.

In contrast to the operation in step S6 shown in FIG. 5 wherein when the value of the atmospheric temperature is less than the given value on the low temperature side, the fundamental target operating temperature is set to the appropriate operating temperature range on the low temperature side, the operation in step S32 is executed such that subtracting " α " from the given value on the high temperature side makes it easy for the appropriate operating temperature range on the low temperature side to be selected as the fundamental target operating temperature.

With the fuel cell system 1, the fundamental target operating temperature is set to the appropriate operating temperature range on the low temperature side with a top priority. Thus, under circumstances where water management is hardly performed for the solid polymer electrolyte membrane of the fuel cell stack 11A and the degree of precision in water balance is called in question, executing the operating temperature control operation shown in FIG. 10 allows the appropriate operating temperature range on the low temperature side to be selected as the fundamental target operating temperature as much as possible. Therefore, the operating temperatures of the fuel cell stack 11A are lowered, thereby enabling the water balance of the fuel cell stack 11A to be reliably established.

As will be apparent from the foregoing description, with the fuel cell control system according to the present invention, the fundamental target operating temperature, which forms a target at which the fuel cell is operated, is set to either the appropriate operating temperature range on the high temperature side or the appropriate operating temperature range on the low temperature side to regulate the operating temperatures of the fuel cell, thereby enabling the fuel cell to generate electric power in the temperature range with high electric power-generating efficiency (system efficiency).

Also, while the fuel cell stack 11A in the above-described fuel cell system has been described as the polymer electrolyte fuel cell, the present invention is not limited to such a kind of fuel cell, it is needless to say that the present invention can be widely applied to fuel cells that are currently on consideration and implementation.

The entire content of Japanese Patent Application No. P2004-084630 with a filing data of March 23, 2004 is herein incorporated by reference.

Although the present invention has been described above by reference to certain embodiments of the invention, the invention is not limited to the embodiments described above and modifications will occur to those skilled in the art, in light of the teachings. The scope of the invention is defined with reference to the following claims.

## Claims

1. A fuel cell control system comprising:
a fuel cell (11A);
an operating temperature detector (16, 17) detecting a value of an operating temperature of the fuel cell;
a cooling device (14, 15) circulating cooling liquid through the fuel cell to regulate the operating temperature of fuel cell; and
a controller (19) controlling the cooling device (14, 15) such that a fundamental target operating temperature, which is an operating temperature to be target for which the fuel cell is operated, is set to either an appropriate operating temperature range on a high temperature side or an appropriate operating temperature range on a low temperature side whereby a value of the operating temperature detected by the operating temperature detector falls in a value within a range of the fundamental target operating temperature.

2. The fuel cell control system according to claim 1, wherein:
the controller (19) sets the appropriate operating temperature range on the low temperature side to the fundamental target operating temperature with a top priority.

3. The fuel cell control system according to claim 1, wherein:
the controller (19) sets the fundamental target operating temperature to the appropriate operating temperature range on the high temperature side with a top priority.

4. The fuel cell control system according to claim 1, wherein:
the controller (19) shifts the fundamental target operating temperature to the appropriate operating temperature range on the high temperature side or the appropriate operating temperature range on the low temperature side under situations where the operating temperature detected by the operating temperature detector is out of the appropriate operating temperature range on the low temperature side or the appropriate operating temperature range on the high temperature side, which are set as the fundamental target operating temperature, for more than a give time interval.

5. The fuel cell control system according to claim 1, further comprising:
atmospheric temperature detecting means (18) for detecting a value of an atmospheric temperature; wherein
the controller (19) shifts the fundamental target operating temperature to the appropriate operating temperature range on the high temperature side under a situation where the value of the atmospheric temperature, detected by the atmospheric temperature detecting means, exceeds a given value.

6. The fuel cell control system according to claim 3, further comprising:
atmospheric temperature detecting means (18) for detecting a value of an atmospheric temperature; wherein
the controller (19) shifts the fundamental target operating temperature to the appropriate operating temperature range on the low temperature side under a situation where the value of the atmospheric temperature, detected by the atmospheric temperature detecting means, is lower than a given value.

7. The fuel cell control system according to claim 2, wherein:
the controller (19) shifts the appropriate operating temperature range on the low temperature side, for the fundamental target operating temperature, to the appropriate operating temperature range on the high temperature side under a situation where the value of the operating temperature, detected by the operating temperature detector (16, 17), exceeds a given value for more than a given time interval.

8. The fuel cell control system according to claim 3, wherein:
the controller (19) shifts the fundamental target operating temperature to the appropriate operating temperature range on the low temperature side from the appropriate operating temperature range on the high temperature side under circumstances where a value of the operating temperature, detected by the temperature detector (16, 17), is less than a value, in which a given value is subtracted from the appropriate operating temperature range on the high temperature side, for more than a given time interval.

9. The fuel cell control system according to claim 7 or claim 8, wherein:
the controller (19) is operative such that after the fundamental target operating temperature is switched over, if the value of the operating temperature, detected by the operating temperature detector, does not fall in the appropriate operating temperature range on the low temperature side or the appropriate operating temperature range on the high temperature side, which is set as the fundamental target operating temperature after the same is switched over, the fundamental target operating temperature is set to the appropriate operating temperature range on the low temperature side or the appropriate operating temperature range on the high temperature side with a value close to the value of the detected operating temperature.

10. The fuel cell control system according to claim 1, wherein:
the controller (19) keeps the fundamental target operating temperature to the appropriate operating temperature range on the low temperature side under a situation where the value of the operating temperature, detected by the operating temperature detector (16, 17), is continuously decreasing.

11. The fuel cell control system according to claim 1, further comprising:
a pure water tank (12) that stores humidifying pure water by which an inside of the fuel cell is humidified; wherein
the controller (19) sets the fundamental target operating temperature to the appropriate operating temperature range on the low temperature side under a situation where a value of a water level in the pure water tank is less than a given value.

12. The fuel cell control system according to claim 1, further comprising:
a navigation system (2) that acquires road status information for which a vehicle is traveling in a later stage; wherein
the controller (19) sets the fundamental target operating temperature to the appropriate operating temperature range on the high temperature side when discrimination is made based on a road altitude acquired from the navigation system that the fundamental target operating temperature cannot be maintained in the appropriate operating temperature range on the low temperature side.

13. The fuel cell control system according to claim 12, wherein:
the road status information includes road gradient information; wherein
the controller (19) sets the fundamental target operating temperature to the appropriate operating temperature range on the high temperature side when discrimination is made based on a road gradient acquired from the navigation system that the fundamental target operating temperature cannot be maintained in the appropriate operating temperature range on the low temperature side.

14. The fuel cell control system according to claim 13, wherein:
the road status information further includes road altitude information; wherein
the controller (19) sets the fundamental target operating temperature to the appropriate operating temperature range on the high temperature side when discrimination is made based on a road altitude acquired from the navigation system that the fundamental target operating temperature cannot be maintained in the appropriate operating temperature range on the low temperature side.

15. A method of controlling a fuel cell system, the method comprising:
providing a fuel cell;
detecting a value of an operating temperature of the fuel cell;
circulating cooling liquid through the fuel cell to regulate the operating temperature of the fuel cell; and
controlling a temperature of the cooling liquid such that a fundamental target operating temperature, which is an operating temperature of the fuel cell to be target for which the fuel cell is operated, is set to either an appropriate operating temperature range on a high temperature side or an appropriate operating temperature range on a low temperature side whereby a value of the detected operating temperature of the fuel cell falls in a value within a range of the fundamental target operating temperature.
